(19) Europäisches Patentamt
European Patent Office
Office européen des brevets

(11) **EP 2 249 616 B1**

(12) **EUROPEAN PATENT SPECIFICATION**

(45) Date of publication and mention
of the grant of the patent:
**26.03.2014  Bulletin 2014/13**

(51) Int Cl.:
*H04W 56/00* *(2009.01)*    *H04W 92/10* *(2009.01)*

(21) Application number: **09707139.3**

(86) International application number:
**PCT/CN2009/070313**

(22) Date of filing: **23.01.2009**

(87) International publication number:
**WO 2009/097812 (13.08.2009 Gazette 2009/33)**

(54) **WIRELESS COMMUNICATION SYSTEM, METHOD FOR ADJUSTING AIR-INTERFACES SYNCHRONOUSLY, BASE STATION AND CONTROL DEVICE THEREOF**

DRAHTLOSES KOMMUNIKATIONSSYSTEM, VERFAHREN ZUM SYNCHRONEN JUSTIEREN VON FUNKSCHNITTSTELLEN, BASISSTATION UND STEUEREINRICHTUNG DAFÜR

SYSTÈME DE COMMUNICATION SANS FIL, PROCÉDÉ D'AJUSTEMENT SYNCHRONE D'INTERFACES RADIO, STATION DE BASE ET SON DISPOSITIF DE COMMANDE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **31.01.2008  CN 200810065267**

(43) Date of publication of application:
**10.11.2010  Bulletin 2010/45**

(60) Divisional application:
**13198992.3**

(73) Proprietor: **Huawei Technologies Co., Ltd.
Longgang District, Shenzhen
Guangdong 518129 (CN)**

(72) Inventors:
• **REN, Yongzheng
Shenzhen
Guangdong 518129 (CN)**
• **PENG, Xiang
Shenzhen
Guangdong 518129 (CN)**

(74) Representative: **Thun, Clemens et al
Mitscherlich & Partner
Sonnenstraße 33
80331 München (DE)**

(56) References cited:
**EP-A2- 1 605 610      WO-A1-01/15345
WO-A1-99/65163        CN-A- 1 571 296
CN-A- 1 905 405        CN-A- 101 035 327
CN-A- 101 232 325**

**Description**

**Field of the Invention**

The present invention relates to radio communications, and in particular, to a radio communication system, an air interface synchronization method, a Base Station (BS) and a Base Station Controller (BSC).

**Background of the Invention**

The air interface (also referred to as a radio interface) in the communication field is an interface between a terminal and an access network and normally consists of a physical layer, a data link layer and a network layer. The physical layer is the bottom layer of the air interface and supports the transmission of bit streams over physical media. The physical layer is connected to the Medium Access Control (MAC) sublayer of the data link layer and the Radio Resource Control (RRC) sublayer of the network layer.

If no synchronization technique is adopted, the air interfaces of different BSs in a radio network are normally not synchronized, but a network with synchronized air interfaces is required by many network capacity expansion techniques. For example, in a network with synchronized air interfaces, the probability of frequency collision between the coverage areas of different cells is controllable; and the Dynamic Frequency and Channel Allocation (DFCA) technique can be deployed to increase capacity by above 40% in close multiplexing scenarios. Therefore, air interface synchronization plays an important role in improving the performance of a network.

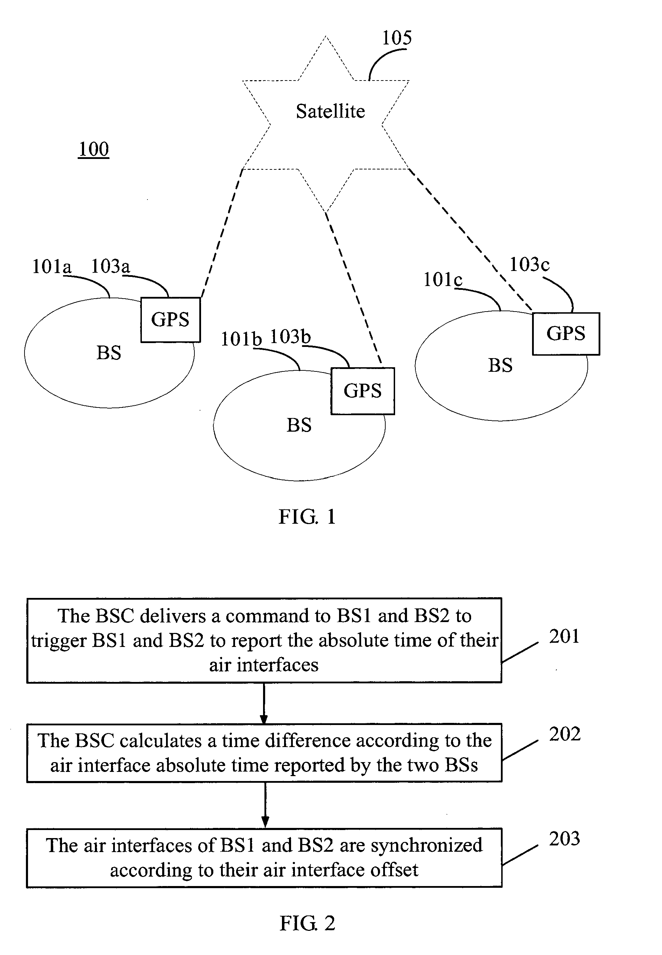

FIG. 1 illustrates an air interface synchronization method in a prior art, where a Global Positioning System (GPS) is used. A GPS synchronization apparatus 103 is installed in every BS 101. The GPS synchronization apparatus 103 synchronizes BSs 101 with one satellite 105 so that air interfaces of every two BSs are synchronized and that the entire network is synchronized eventually. The purpose of GPS synchronization is to correct the phase of system frames so that all BSs have a uniform frame phase, which means all system frames in the system have a uniform start point of synchronization. Such GPS assisted air interface synchronization technique is known as hard synchronization.

In the process of developing the present invention, the inventor discovers at least the following weaknesses in the prior art:

    (1) High construction cost. A GPS synchronization apparatus must be installed in every BS in the synchronization system so that the construction cycle is long and that the cost is high.
    (2) High maintenance cost. Once a GPS synchronization apparatus fails, for example, the GPS synchronization apparatus, a feeder or a BS board becomes abnormal, human maintenance is necessary. Human maintenance consumes time and requires manpower and materials and therefore the maintenance cost is high.

CN 101035327 A (Radio communication system, air interface synchronization method, base station, and base station controller) primarily relates to a radio communication system, an air interface synchronization method, a BS, and a BSC. The radio communication system includes at least two BSs and a BSC. The two BSs are adapted to: receive the same signal sent by an MS, record time of receiving the signal, and report the time to a BSC; and the BSC is adapted to obtain the signal receiving time recorded by the two BSs, obtain an air interface offset between the two BSs according to the signal receiving time, and deliver the offset to the two BSs. The two BSs are further adapted to synchronize air interfaces of the two BSs according to the offset.

WO 01/15345 (Synchronization deviation detection) primarily relates to a method for monitoring synchronization deviation in a mobile telecommunication system. The system records the deviation in the synchronization between base stations which may be computed from measurements made at handover of a mobile station between base stations and when the deviation exceeds a predetermined threshold, an alarm is triggered which provides an alert to adjust the synchronization of the system.

EP 1605610 A2 (Base station synchronization for wireless communication systems) primarily to a system and method for time synchronizing a plurality of base stations in a wireless communication system. The system determines an estimate of a timing accuracy associated with each base station. When a base station's timing accuracy is over a threshold, the system determines if there is a neighboring base station with a better timing accuracy. The base station over the threshold is adjusted in response to an estimated difference between that base station and the neighboring base station.

WO 99/65163 A1(A method for synchronization of a cellular radio network) primarily to a method of synchronization of a cellular radio network, the network comprising at least two radio transceiver devices(BS) of a first type, and at least one radio transceiver device(MS) of a second type, the method comprising the steps of measuring timing offsets(OTD) between respective pairs of said first type radio transceiver devices(BS) by means of at least one of said second type radio transceiver devices(MS), controlling said first type BS by means of controller device(BSC) on the basis of said measured timing offsets(OTD) such that one of said first type BS is set as a master transceiver device(M_BS) with the transmission and reception timing thereof remaining unchanged, and the remaining first type transceiver devices are set as slave transceiver devices(S_BS) with the transmission and reception timing thereof being adjusted so as to be adapted to the timing of said master transceiver device(M_BS), with the timing being adjusted such that subsequently measured timing offsets (OTD) between said master transceiver device (M_BS) and each respective slave transceiver device (S_BS) are minimized.

## Summary of the Invention

Embodiments of the present invention provide a radio communication system and a method for air interface synchronization so that it is easier and cheaper to achieve air interface synchronization.

Embodiments of the present invention also provide a BS and a BSC for air interface synchronization so that it is easier and cheaper to achieve air interface synchronization. For achieving objective as mentioned above, embodiments of the present invention provide an air interface synchronization method, including:

obtaining an air interface offset between a first BS and a second BS; and
synchronizing air interfaces of the first BS and the second BS according to the offset;
wherein the air interface synchronization method is characterized in that the process of obtaining (201, 202) the air interface offset between the first and the second BS further comprises:

calculating (306), the air interface offset between the first BS and the second BS by using a air interface offset between the first BS and the second BS which is reported by a Mobile Station, MS, and Time Advance, TA, values reported by the MS, if the air interface offset between the first BS and the second BS which is reported by the MS meets protocol requirement.

Embodiments of the present invention also provide a BSC, including:

an air interface offset obtaining unit, adapted to obtain an air interface offset between a first BS and a second BS; and
an instructing unit, coupled with the air interface offset obtaining unit, and adapted to instruct the first or the second BS to synchronize air interfaces of the first BS and the second BS according to the offset obtained by the air interface offset obtaining unit;
wherein the BSC is characterized in that the air interface offset between the first BS and the second BS obtained by the air interface offset obtaining unit is calculated by using a air interface offset between the first BS and the second BS which is reported by a Mobile Station, MS, and Time Advance, TA, values reported by the MS, if the air interface offset between the first BS and the second BS which is reported by the MS meets protocol requirement.

Embodiments of the present invention also provide a radio communication system, including:

a Base Station Controller, BSC, as defined previously and a Base Station, BS, wherein the BS comprises:

a signaling receiving unit (803), configured to receive an air interface offset between the BS and a second BS from the BSC; and
a controlling unit (805), coupled with the signaling receiving unit, configured to synchronize the air interface of the BS by using the air interface offset between the BS and the second BS which is received by the signaling receiving unit(803).

In the embodiments of the present invention, the air interfaces of two BSs are synchronized without expensive synchronization devices, and the maintenance cost is reduced. Compared with the prior art which uses GPS hard synchronization to synchronize air interfaces so that the construction cost and maintenance cost are high, the present invention utilizes the resources in the existing radio network to effectively and easily achieve air interface synchronization, and the cost is lower.

## Brief Description of the Drawings

FIG. 1 illustrates a GPS assisted air interface synchronization method in prior art;
FIG. 2 is an illustrative flowchart of an air interface synchronization method in an embodiment of the present invention;

FIG. 3 is an illustrative flowchart of an air interface synchronization method in another embodiment of the present invention;
FIG. 4 illustrates a system for global network synchronization in an embodiment of the present invention;
FIG. 5 illustrates a BSC in an embodiment of the present invention;
FIG. 6 illustrates a BSC in another embodiment of the present invention;
FIG. 7 illustrates a BSC in still another embodiment of the present invention; and
FIG. 8 illustrates a BS in an embodiment of the present invention.

**Detailed Description of the Invention**

To make the technical solution, objectives and merits of the present invention clearer, the following describes the embodiments of the present invention in detail with reference to the accompanying drawings.

The embodiments of the present invention are based on the Global System for Mobile Communications (GSM). The application of the present invention to other systems such as Code Division Multiple Access (CDMA), Wideband Code Division Multiple Access (WCDMA) and Time Division-Code Division Multiple Access (TD-CDMA) networks can be understood by analogy. For purposes of description, the BSC and BS referred to hereafter are respectively the BSC and BS in a GSM system as an example. In other embodiments, the BSC and BS may be a Radio Network Controller (RNC) and a NodeB in a WCDMA system, or others. Likewise, the entities, devices, apparatuses and units with specific names herein may be replaced by other entities, devices, apparatuses and units of the same or similar functions.

In one embodiment of the present invention, the air interfaces of multiple BSs may be synchronized in the same way as the air interfaces of two BSs are synchronized until the air interfaces of the entire network are synchronized.

FIG. 2 illustrates an air interface synchronization method in an embodiment of the present invention. The method includes:

Step 201: A BSC delivers a command to BS1 and BS2 to trigger the BS1 and the BS2 to report the absolute time of their air interfaces.

In this step, the BSC may deliver the command to BS1 and BS2 via a Radio Signaling Link (RSL) or an Operation and Maintenance Link (OML) between the BSC and the BS. Because the transmission and reception of commands between the BSC and the BS may be easily impacted by the transmission delay and upper layer processing, in practice, to increase the precision, best efforts may be made to guarantee that BS1 and BS2 receive the command delivered by the BSC simultaneously.

Then, the BS1 and the BS2 report via signaling the absolute time of the BS air interface when the command delivered by the BSC is received, such as a frame number and/or an intra-frame bit offset, namely, a specific frame and/or a specific bit of a specific frame. The signaling may be carried over the RSL or OML between the BSC and the BS. Step 202: The BSC calculates a time difference according to the air interface absolute times reported by the two BSs, or calculates the air interface offset between the two BSs. For example, fn stands for the frame number of a system frame; bit stands for a bit offset; and the BS air interface absolute time may be described as (fn_x, bit_x). For example, the air interface absolute time of BS1 is (fn_1, bit_1) and the air interface absolute time of BS2 is (fn_2, bit_2). Then, the air interface offset between the BSs may be calculated as the difference between the frame numbers recorded by the two BSs:

$$\text{Air interface offset between BSs} = fn\_1 - fn\_2.$$

In other embodiments, an adjustment may be made based on bit values so as to increase the precision of such adjustment. For example, the air interface offset between the two BSs may be calculated by obtaining the product of the frame number difference recorded by the two BSs (fn_1-fn_2) and 1250, and obtaining the bit offset recorded by the two BSs (bit_1-bit_2). Then, the sum of the product and the bit offset is a difference of the air interface absolute time between the BSs.

This means: the air interface offset between BSs = (fn_1-fn_2) x 1250 + (bit_1-bit_2).

Step 203: The air interfaces of BS1 and BS2 are synchronized according to their air interface offset.

In this step, the BSC delivers the BS air interface offset to BS2; then BS2 adjusts the frame interruption time according to the air interface offset to synchronize the air interface of BS2. If the purpose is only to adjust the frame number difference of the two BSs, the offset of air interface absolute time of the two BSs may be adjusted to below a certain threshold, for example, the threshold is 400 frames. In this step, the BSC may also deliver the BS air interface offset to BS1 alternatively; then BS1 adjusts the frame interruption time according to the air interface offset to synchronize the air interface of BS1. If the purpose is to adjust the frame number difference of only two BSs, the offset of air interface absolute time of the two BSs may be adjusted to below a certain threshold, for example, the threshold is 400 frames.

In other embodiments, the BSC may deliver the air interface offset of BSs represented by fn or represented by fn and bit to one or both of the two BSs. The BS that receives the air interface offset may change the frame number directly according to fn to synchronize the frame number so that the offset of air interface absolute time between the two BSs can be adjusted to below a certain threshold, such as 400 frames. It is understandable that the air interface absolute time offset between two BSs may be controlled within a range defined by a predetermined reasonable threshold; or, further, the BS may complete synchronization through fine tuning of the timeslot interruption time (control of the bit count).

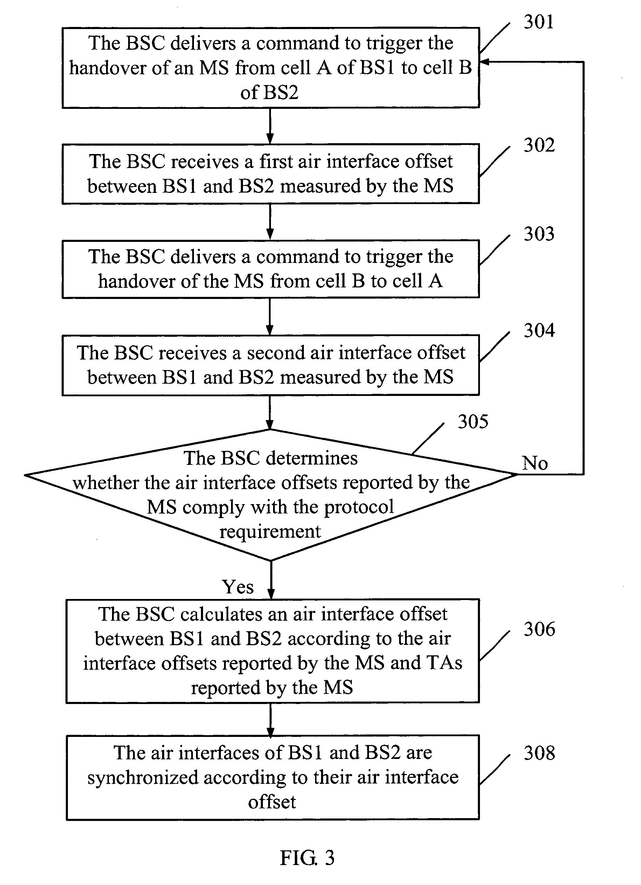

FIG. 3 illustrates an air interface synchronization method in another embodiment of the present invention. The method includes:

Step 301: A BSC delivers a command to trigger the handover of a Mobile Station (MS) from a cell of BS1 (such as cell A) to a cell of BS2 (such as cell B).

The BSC may deliver a handover command that carries a Report Observed Time Difference (ROT) flag to the MS so as to trigger the handover of the MS from cell A to cell B.

Step 302: The BSC obtains a first air interface offset between BS1 and BS2 measured by the MS.

Because the MS may receive information over the Broadcast Control Channel (BCCH) from different cells (such as cell A and cell B), the MS may obtain the air interface absolute time of the BSs, such as a frame number and an intra-frame bit offset, namely, the specific bit of a specific frame.

Then, the MS may calculate the air interface offset between the two BSs according to the air interface absolute time of the two BSs.

For example, fn stands for the frame number of a system frame; bit stands for a bit offset; and the BS air interface absolute time may be described as (fn_x, bit_x). For example, the air interface absolute time of BS1 is (fn_1, bit_1) and the air interface absolute time of BS2 is (fn_2, bit_2). The air interface offset between the two BSs may be calculated by obtaining the product of the frame number difference recorded by the two BSs (fn_1-fn_2) and 1250, and obtaining the bit offset recorded by the two BSs (bit_1-bit_2). Then, the sum of the product and the bit offset is the air interface offset between the BSs.

This means: the air interface offset between BSs = (fn_1 - fn_2) x 1250 + (bit_1-bit_2).

Then, the MS reports the calculated air interface offset between the two BSs to the BSC via signaling. For example, the air interface offset between the two BSs calculated by the MS is carried in a Handover Complete message.

Step 303: The BSC delivers a command to trigger the handover of the MS from cell B to cell A.

This step is the same as step 301.

Step 304: The BSC obtains a second air interface offset between BS1 and BS2 measured by the MS.

This step is similar to step 302.

Step 305: The BSC determines whether the air interface offsets reported by the MS meet the protocol requirement.

In practical scenarios, it is found that some air interface offsets reported by an MS do not meet the protocol requirement and cannot be used as the real air interface offset. Therefore, it is necessary to check the air interface offsets reported by the MS. In this embodiment, ping-pong handover of the MS is triggered so as to obtain two air interface offsets and the two air interface offsets are judged complementarily to check whether the air interface offsets reported by the MS meet the protocol requirement.

Delta_1 stands for the first air interface offset and Delta_2 stands for the second air interface offset and the complementary judgment of the air interface offsets may be described in the following formula:

Delta_1/2 = (total number of frames in a super frame - Delta_2/2) mod 2^20. Mod means the modulo operation; 2^20 means the 20th power of 2. A specific example is as follows:

$$\text{Delta\_1/2} = (2048 \times 51 \times 1250 - \text{Delta\_2/2}) \bmod 2^{20}$$

If Delta _1 and Delta_2 satisfy the above equation, it can be determined that the air interface offsets reported by an MS meet the protocol requirement.

Step 306: If the air interface offsets reported by the MS meet the protocol requirement, the BSC calculates the air interface offset between BS1 and BS2 according to the air interface offsets reported by the MS and the Time Advance (TA) values reported by the MS.

For example, the TA of the MS with BS1 is ta_1; the TA of the MS with BS2 is ta_2 (the two TAs are obtained from existing interface messages such as a measurement report); the air interface offset can be obtained according to the air interface offsets reported by the MS and the TAs reported by the MS:

$$\text{Air interface offset} = \text{Delta\_1} + (\text{ta\_1} - \text{ta\_2})/2;$$

or

$$\text{Air interface offset} = \text{Delta\_1} + (\text{ta\_2} - \text{ta\_1})/2$$

If the air interface offsets reported by the MS do not meet the protocol requirement, the BSC chooses another MS and steps 301 to 305 are repeated based on the new MS.

Step 308: The air interfaces of BS1 and BS2 are synchronized according to their air interface offsets.

In this step, the BSC delivers the air interface offset between BS1 and BS2 to BS2; then BS2 adjusts its frame interruption time according to the air interface offset between BS1 and BS2 to synchronize its air interface with the air interface of BS 1. Alternatively, the BSC delivers the air interface offset between BS1 and BS2 to BS1; then BS1 adjusts its frame interruption time according to the air interface offset between BS 1 and BS2 to synchronize its air interface with the air interface of BS2.

In another embodiment of the present invention, to synchronize the air interfaces of two BSs (such as BS1 and BS2), the methods shown in FIG. 2 and FIG. 3 are combined for illustration.

For example, steps 201 to 203 are first executed, followed by steps 301 to 308. In this embodiment, step 203 may only complete the synchronization of frame numbers so that the offset of air interface absolute time of the two BSs is adjusted to below a certain threshold, for example, the certain threshold is 400 frames; the technical solution of steps 201 to 203 may be adopted to perform frame number synchronization according to the air interface offset (a first air interface offset) obtained by the BSC so that the air interface offset of the two BSs is adjusted to below a certain threshold, thus performing the preliminary air interface adjustment of the two BSs. After the preliminary adjustment, the air interface absolute time of the two BSs is close. However, as described above, the transmission and reception of commands between a BSC and a BS will be impacted by transmission delay and upper layer processing. Therefore, after the preliminary adjustment, there may still be an air interface offset between the two BSs.

In view of this, on the basis of the preliminary adjustment, a further air interface adjustment may be made for the two BSs: steps 301 to 308 are executed to further adjust the air interfaces of the two BSs according to a predetermined air interface offset (a second air interface offset) so as to implement the fine adjustment of air interfaces of the two BSs.

The synchronization of air interfaces between two BSs is described above.

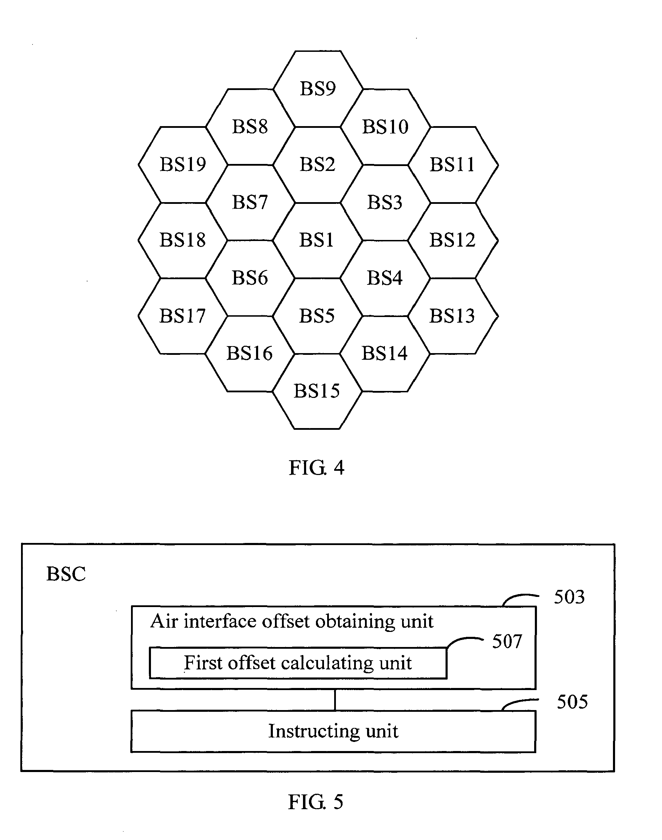

Based on the above synchronization of air interfaces between two BSs, the air interfaces of more BSs may continue to be synchronized until the air interfaces of all BSs controlled by the BSC are synchronized. FIG. 4 illustrates a system for global network synchronization according to an embodiment of the present invention.

In an embodiment of the present invention, the method for global network synchronization, based on the air interface synchronization method for two BSs, further includes the following steps:

Take one of the two BSs as a center and reference to synchronize the air interfaces of surrounding BSs.

For synchronized BSs around the central BS, no more adjustment is needed. For example, BS1 is the center and reference. Steps 201 to 203 and/or steps 301 to 308 are executed to synchronize the air interfaces of BSs around BS1, and the synchronized BSs (like BS2) need no further adjustment. The BSs around BS1 are those whose coverage area is adjacent to the coverage of BS1. With reference to FIG. 4, BSx stands for the No.x BS, and then BSs around BS1 are: BS2, BS3, BS4, BS5, BS6, and BS7.

Use a synchronized surrounding BS as a center and reference and the air interfaces of BSs around this central BS will be synchronized.

For synchronized BSs around the central BS, no more adjustment is needed. For example, a synchronized surrounding BS (like BS2) is used as a center and reference and steps 201 to 203 and/or steps 301 to 308 are executed to synchronize those around the central BS (like BS2) that are not synchronized, such as BS8, BS9, and BS10.

Through such iteration and expansion, the entire network will be finally synchronized.

Based on the description of the foregoing embodiments, it is understandable that the air interface synchronization method of the present invention may be implemented by existing hardware with software loaded on the hardware so as to synchronize the air interfaces of two BSs and to further synchronize all air interfaces in the entire network. The present invention requires no costly synchronization device and reduces the maintenance cost. Compared with the prior art which uses GPS hard synchronization to synchronize air interfaces so that the construction cost and maintenance cost are high, the present invention utilizes the resources in the existing radio network to effectively achieve air interface synchronization so that the cost is lower.

It is understandable to those skilled in the art that all or part of the steps in the foregoing embodiments may be implemented by hardware instructed by a program, which may be stored in a computer readable storage medium. When the program is executed, the following steps may be included: obtaining an air interface offset between a first BS and a second BS; and synchronizing the air interfaces of the first BS and the second BS according to the offset. The computer readable storage medium includes but is not limited to a Read-Only Memory (ROM), a Random Access Memory (RAM), a magnetic disk and a compact disk.

As shown in FIG. 5, a BSC in an embodiment of the present invention includes:

an air interface offset obtaining unit 503, adapted to obtain an air interface offset between a first BS and a second BS; and

an instructing unit 505, coupled with the air interface offset obtaining unit 503, and adapted to deliver an instruction, instructing the first or second BS to synchronize the air interfaces of the first BS and the second BS according to the air interface offset between the first BS and the second BS, where the instruction carries the air interface offset between the first BS and the second BS.

Instructing the first BS or the second BS to synchronize the air interfaces of the first BS and the second BS according to the air interface offset between the first BS and the second BS may include:

instructing the first BS or the second BS to adjust the air interface frame interruption time or frame number of the BS according to the air interface offset between the first BS and the second BS; or

instructing the first BS or the second BS to adjust the air interface of the BS according to the air interface offset between the first BS and the second BS so that the offset between the air interface absolute time of the first BS and the air interface absolute time of the second BS is below a predetermined adjustment threshold.

The air interface offset obtaining unit 503 may further include a first offset calculating unit 507.

The instructing unit 505 is further adapted to deliver a command to the first BS and the second BS to trigger the first BS to report the air interface absolute time of the first BS and trigger the second BS to report the air interface absolute time of the second BS.

The first offset calculating unit 507 is adapted to receive the air interface absolute time of the first BS and the air interface absolute time of the second BS and calculate the air interface offset between the first BS and the second BS according to the air interface absolute time of the first BS and the air interface absolute time of the second BS.

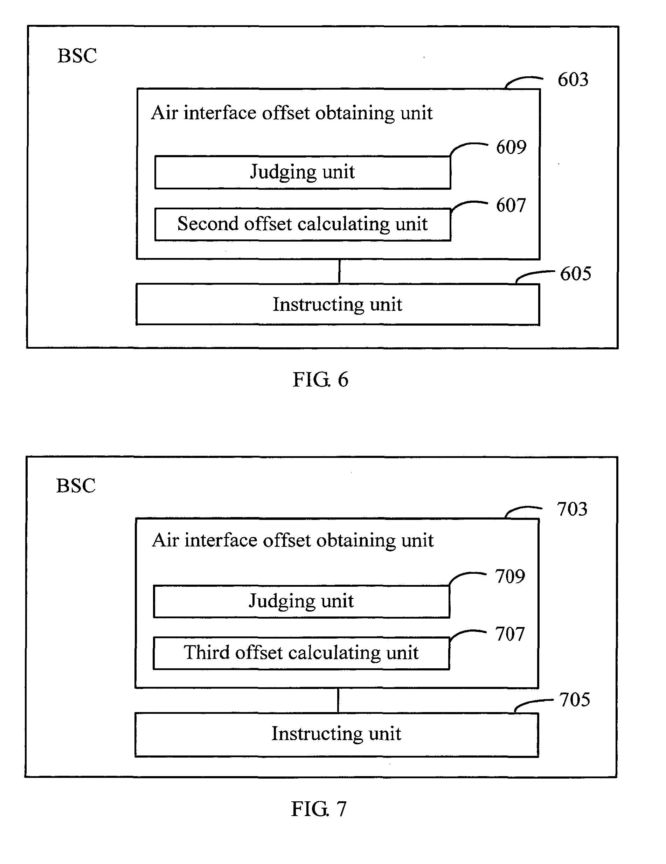

As shown in FIG. 6, a BSC in another embodiment of the present invention includes:

an air interface offset obtaining unit 603, adapted to obtain an air interface offset between a first BS and a second BS; and

an instructing unit 605, coupled with the air interface offset obtaining unit 503, and adapted to deliver an instruction, instructing the first or second BS to synchronize the air interfaces of the first BS and the second BS according to the air interface offset between the first BS and the second BS, where the instruction carries the air interface offset between the first BS and the second BS.

The air interface offset obtaining unit 603 may further include a second offset calculating unit 607 and a judging unit 609.

The instructing unit 605 may be further adapted to:

deliver a command to trigger the handover of an MS from a first cell of a first BS to a second cell of a second BS, where the MS measures and reports a first air interface offset between the first BS and the second BS; and

deliver a command to trigger the handover of the MS from the second cell to the first cell, where the MS measures and reports a second air interface offset between the first BS and the second BS.

The judging unit 609 is adapted to:

obtain the first air interface offset between the first BS and the second BS measured by the MS;

obtain the second air interface offset between the first BS and the second BS measured by the MS; and

make a judgment on the first air interface offset and the second air interface offset and if the first air interface offset and the second air interface offset meet a predetermined requirement, output the first air interface offset and the second air interface offset to the second offset calculating unit 607.

In particular, according to a predetermined requirement, the first air interface offset and the second air interface offset are required to satisfy the following formula:

the first air interface offset = (total number of frames in a super frame - the second air interface offset) mod 2 ^20.

The second offset calculating unit 607 is adapted to calculate an air interface offset between the first BS and the second BS according to the first air interface offset or the second air interface offset and TAs reported by the MS.

As shown in FIG. 7, a BSC in another embodiment of the present invention includes:

an air interface offset obtaining unit 703, adapted to obtain an air interface offset between a first BS and a second BS; and

an instructing unit 705, coupled with the air interface offset obtaining unit 503, and adapted to deliver an instruction, instructing the first or second BS to synchronize the air interfaces of the first BS and the second BS according to the air interface offset between the first BS and the second BS, where the instruction carries the air interface offset between the first BS and the second BS.

The air interface offset obtaining unit 703 may further include a third offset calculating unit 707 and a judging unit 709.

The instructing unit 705 is further adapted to deliver a command to the first BS and the second BS to trigger the first BS to report the air interface absolute time of the first BS and trigger the second BS to report the air interface absolute time of the second BS.

The third offset calculating unit 707 is adapted to receive the air interface absolute time of the first BS and the air interface absolute time of the second BS and calculate a first air interface offset between the first BS and the second BS according to the air interface absolute time of the first BS and the air interface absolute time of the second BS.

The instructing unit 705 is adapted to deliver a command, instructing the first or the second BS to adjust the air interface of the BS according to the first air interface offset so that the air interface absolute time offset between the first BS and the second BS is below a predetermined adjustment threshold, for example, the threshold is 400 frames.

The instructing unit 705 may be further adapted to:

deliver a command to trigger the handover of an MS from a first cell of a first BS to a second cell of a second BS, where the MS measures and reports a first air interface offset between the first BS and the second BS; and

deliver a command to trigger the handover of the MS from the second cell to the first cell, where the MS measures and reports a second air interface offset between the first BS and the second BS.

The judging unit 709 may be adapted to:

obtain the first air interface offset between the first BS and the second BS measured by the MS;

obtain the second air interface offset between the first BS and the second BS measured by the MS; and

make a judgment on the first air interface offset and the second air interface offset and if the first air interface offset and the second air interface offset meet a predetermined requirement, output the first air interface offset and the second air interface offset to the third offset calculating unit.

In particular, according to a predetermined requirement, the first air interface offset and the second air interface offset are required to satisfy the following formula:

the first air interface offset = (total number of frames in a super frame - the second air interface offset) mod 2 ^20.

The third offset calculating unit 707 may be further adapted to: calculate a second air interface offset between the first BS and the second BS according to the first air interface offset or the second air interface offset and TAs reported by the MS.

The instructing unit 705 may be adapted to deliver a command, instructing the first or the second BS to further synchronize the air interface of the BS according to the second air interface offset.

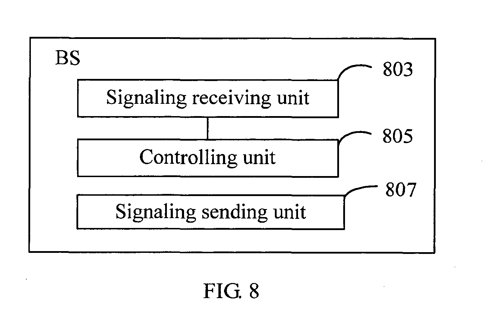

As shown in FIG. 8, a BS in an embodiment of the present invention includes:

a signaling receiving unit 803, adapted to receive an air interface offset between the BS and a second BS from a BSC; and

a controlling unit 805, coupled with the signaling receiving unit, and adapted to synchronize the air interface of the BS according to the air interface offset between the BS and the second BS.

The BS may further include a signaling sending unit 807.

The signaling receiving unit 803 may be further adapted to receive a command from the BSC.

The signaling sending unit 807 may be adapted to report the air interface absolute time of the BS according to the command from the BSC.

The signaling receiving unit 803 may be further adapted to receive an instruction from the BSC.

The controlling unit 805 may be adapted to:

adjust the air interface frame interruption time or frame number according to the instruction from the BSC and the air interface offset between the BS and the second BS; or

adjust the air interface of the BS according to the instruction from the BSC and the air interface offset between the BS and the second BS so that the offset between the air interface absolute time of the BS and the air interface absolute time of the second BS is below a predetermined adjustment threshold.

A radio communication system in an embodiment of the present invention includes the BSC shown in FIG. 5, 6 or 7 and described by texts in the embodiment corresponding to the figures and the BS shown in FIG. 8 and described by corresponding texts in the embodiment.

Based on the above description, it is understandable that the embodiments of the present invention may be implemented by existing hardware with software loaded on the hardware so as to synchronize the air interfaces of two BSs and the present invention requires no costly synchronization device and reduces the maintenance cost. Compared with the prior art which uses GPS hard synchronization to synchronize air interfaces so that the construction cost and maintenance cost are high, the present invention utilizes the resources in the existing radio network to effectively achieve air interface synchronization so that the cost is lower.

It should be noted that the units included by the BS and BSC in the embodiments of the present invention may be integrated into one processing module or exist as independent physical units, or two or more units may be integrated into one module. The integrated module may be performed in the form of hardware or a software module. If the integrated module is performed in the form of a software module and sold or used as an independent product, the integrated module may also be stored in a computer readable storage medium. The computer readable storage medium includes but is not limited to a ROM/RAM, a magnetic disk and a compact disk.

Detailed above are a radio communication system, an air interface synchronization method, a BS, and a BSC provided in the embodiments of the present invention. Although the invention has been described through several exemplary embodiments, the invention is not limited to such embodiments.

It is understandable to those skilled in the art that the method provided in the embodiments may be implemented by hardware instructed by a program, which may be stored in a readable storage medium. When the program is executed, the program completes the steps in the method. The storage medium may be a ROM/RAM, a magnetic disk, a compact disk, and so on.

The foregoing embodiments are exemplary only and are not intended to limit the present invention.

### Claims

1. An air interface synchronization method, comprising:

obtaining (201, 202) an air interface offset between a first Base station, BS, and a second BS; and
synchronizing (203) air interfaces of the first BS and the second BS according to the air interface offset between the first BS and the second BS;
wherein the air interface synchronization method is **characterized in that** the process of obtaining (201, 202) the air interface offset between the first and the second BS further comprises:

calculating (306), the air interface offset between the first BS and the second BS by using a air interface offset between the first BS and the second BS which is reported by a Mobile Station, MS, and Time Advance, TA, values reported by the MS, if the air interface offset between the first BS and the second BS which is reported by the MS meets protocol requirement.

2. The method of claim 1, wherein the process of the calculating (306) the air interface offset between the first BS and the second BS by using a air interface offset between the first BS and the second BS which is reported by a Mobile Station, MS, and Time Advance, TA, values reported by the MS, wherein the air interface offset between the first BS and the second BS which is reported by the MS meets protocol requirement, further comprises:

> triggering (301) a handover of the MS from a first cell of the first BS to a second cell of the second BS;
> obtaining (302) a first air interface offset between the first BS and the second BS measured by the MS;
> triggering (303) a handover of the MS from the second cell to the first cell;
> obtaining (304) a second air interface offset between the first BS and the second BS measured by the MS; and
> calculating (306) the air interface offset between the first BS and the second BS by using the first air interface offset or the second air interface offset reported by the MS and the TA values reported by the MS when the first air interface offset and the second air interface offset meet a predetermined requirement.

3. The method of claim 1, wherein the process of the calculating (306) the air interface offset between the first BS and the second BS by using a air interface offset between the first BS and the second BS which is reported by a Mobile Station, MS, and Time Advance, TA, values reported by the MS, wherein the air interface offset between the first BS and the second BS which is reported by the MS meets protocol requirement, further comprises:

> triggering (301) a handover of the MS from a first cell of the first BS to a second cell of the second BS;
> obtaining (302) a first air interface offset between the first BS and the second BS measured by the MS;
> triggering (303) a handover of the MS from the second cell to the first cell;
> obtaining (304) a second air interface offset between the first BS and the second BS measured by the MS; and
> if the first air interface offset and the second air interface offset does not meet a predetermined requirement, selecting another MS and obtaining the air interface offset between the first BS and the second BS.

4. The method of claim 2 or 3, wherein the predetermined requirement is that the first air interface offset and the second air interface offset satisfies a formula:

> the first air interface offset = (total number of frames in a super frame -the second air interface offset) mod $2^{20}$.

5. The method of any one of claims 1-4, wherein the method further comprises:

> taking the first BS or the second BS as a reference BS to synchronize air interfaces of BSs which surround the reference BS (308).

6. A Base Station Controller, BSC, comprising:

> an air interface offset obtaining unit (503), configured to obtain an air interface offset between a first BS and a second BS; and
> an instructing unit (505), coupled with the air interface offset obtaining unit (503), and configured to instruct the first BS or the second BS to synchronize air interfaces of the first BS and the second BS by using the air interface offset between the first BS and the second BS obtained by the air interface offset obtaining unit;
> wherein the BSC is **characterized in that** the air interface offset between the first BS and the second BS obtained by the air interface offset obtaining unit is calculated by using a air interface offset between the first BS and the second BS which is reported by a Mobile Station, MS, and Time Advance, TA, values reported by the MS, if the air interface offset between the first BS and the second BS which is reported by the MS meets protocol requirement.

7. The BSC of claim 6, wherein:

> the air interface offset obtaining unit (503) further comprises a second offset calculating unit (607) and a judging unit (609);
> the instructing unit (505) is further configured to:
>
> > instruct a handover of an MS from a first cell of the first BS to a second cell of the second BS, wherein the MS measures and reports a first air interface offset between the first BS and the second BS and instruct a handover of the MS from the second cell to the first cell, wherein the MS measures and reports a second air interface offset between the first BS and the second BS;
> > the judging unit (609) is configured to obtain the first air interface offset between the first BS and the second BS measured by the MS and obtain the second air interface offset between the first BS and the second BS measured by the MS; the judging unit (609) is further configured to make a judgment on the first air interface offset and the second air interface offset and if the first air interface offset and the second air interface offset meet a predetermined requirement, output the first air interface offset and the second air interface offset to the second offset calculating unit; and

the second offset calculating unit (607) is configured to calculate the air interface offset between the first BS and the second BS by using the first air interface offset or the second air interface offset and Time Advance, TA, values reported by the MS.

**8.** A radio communication system, comprising:

a Base Station Controller, BSC, of any one of claims 6-7 and a Base Station, BS, wherein the BS comprises:

a signaling receiving unit (803), configured to receive an air interface offset between the BS and a second BS from the BSC; and
a controlling unit (805), coupled with the signaling receiving unit, configured to synchronize the air interface of the BS by using the air interface offset between the BS and the second BS which is received by the signaling receiving unit(803).

**9.** The radio communication system of claim 8, wherein the BS further comprises a signaling sending unit (807);
the signaling receiving unit (803) is further configured to receive a command which for instructing the BS to report an air interface absolute time of the BS to a BSC; and
the signaling sending unit (807) is configured to report the air interface absolute time of the BS in response to the command from the BSC.

**10.** The radio communication system of claim 8, wherein the BS further comprises::

the signaling receiving unit (803), further configured to receive an instruction from the BSC; and
the controlling unit (805), further configured to adjust an air interface frame interruption time or frame number in response to the instruction from the BSC by using the air interface offset between the BS and the second BS or to adjust the air interface of the BS in response to the instruction from the BSC by using the air interface offset between the BS and the second BS so that a offset between the air interface absolute time of the BS and the air interface absolute time of the second BS is below a predetermined adjustment threshold.

**Patentansprüche**

**1.** Verfahren zum Synchronisieren von Luftschnittstellen, das umfasst:

Erhalten (201, 202) eines Luftschnittstellen-Versatzes zwischen einer ersten Basisstation, BS, und einer zweiten BS und
Synchronisieren (203) von Luftschnittstellen der ersten BS und der zweiten BS gemäß dem Luftschnittstellen-Versatz zwischen der ersten BS und der zweiten BS,
wobei das Verfahren zum Synchronisieren von Luftschnittstellen **dadurch gekennzeichnet ist, dass** der Prozess des Erhaltens (201, 202) des Luftschnittstellen-Versatzes zwischen der ersten und der zweiten B S außerdem umfasst:

Berechnen (306) des Luftschnittstellen-Versatzes zwischen der ersten BS und der zweiten BS mithilfe eines Luftschnittstellen-Versatzes zwischen der ersten BS und der zweiten BS, der von einer Mobilstation, MS, gemeldet wird, sowie mithilfe von der Mobilstation gemeldeter Zeitfortschrittswerte, TA-Werte (Time Advance values), wenn der von der MS gemeldete Luftschnittstellen-Versatz zwischen der ersten BS und der zweiten BS einer Protokollanforderung entspricht.

**2.** Verfahren nach Anspruch 1, wobei der Prozess des Berechnens (306) des Luftschnittstellen-Versatzes zwischen der ersten BS und der zweiten BS mithilfe eines Luftschnittstellen-Versatzes zwischen der ersten BS und der zweiten BS, der von einer Mobilstation, MS, gemeldet wird, sowie mithilfe von der Mobilstation gemeldeter Zeitfortschrittswerte, TA-Werte, wobei der von der MS gemeldete Luftschnittstellen-Versatz zwischen der ersten BS und der zweiten BS einer Protokollanforderung entspricht, außerdem umfasst:

Auslösen (301) einer Übergabe der MS von einer ersten Zelle der ersten BS an eine zweite Zelle der zweiten BS;
Erhalten (302) eines ersten, von der MS gemessenen Luftschnittstellen-Versatzes zwischen der ersten BS und der zweiten BS;
Auslösen (303) einer Übergabe der MS von der zweiten Zelle an die erste Zelle;
Erhalten (304) eines zweiten, von der MS gemessenen Luftschnittstellen-Versatzes zwischen der ersten B S und der zweiten B S, und
Berechnen (306) des Luftschnittstellen-Versatzes zwischen der ersten BS und der zweiten BS durch Verwenden des von der MS gemeldeten ersten Luftschnittstellen-Versatzes oder des zweiten Luftschnittstellen-Versatzes sowie der von der MS gemeldeten TA-Werte, wenn der erste Luftschnittstellen-Versatz und der zweite Luftschnittstellen-Versatz eine vorgegebene Anforderung erfüllen.

3. Verfahren nach Anspruch 1, wobei der Prozess des Berechnens (306) des Luftschnittstellen-Versatzes zwischen der ersten BS und der zweiten BS mithilfe eines Luftschnittstellen-Versatzes zwischen der ersten BS und der zweiten BS, der von einer Mobilstation, MS, gemeldet wird, sowie mithilfe von der Mobilstation gemeldeter Zeitfortschrittswerte, TA-Werte, wobei der von der MS gemeldete Luftschnittstellen-Versatz zwischen der ersten BS und der zweiten BS einer Protokollanforderung entspricht, außerdem umfasst:

Auslösen (301) einer Übergabe der MS von einer ersten Zelle der ersten BS an eine zweite Zelle der zweiten BS;
Erhalten (302) eines ersten, von der MS gemessenen Luftschnittstellen-Versatzes zwischen der ersten BS und der zweiten BS;
Auslösen (303) einer Übergabe der MS von der zweiten Zelle an die erste Zelle;
Erhalten (304) eines zweiten, von der MS gemessenen Luftschnittstellen-Versatzes zwischen der ersten BS und der zweiten BS, und
wenn der erste Luftschnittstellen-Versatz und der zweite Luftschnittstellen-Versatz eine vorgegebene Anforderung nicht erfüllen, Auswählen einer anderen MS und Erhalten des Luftschnittstellen-Versatzes zwischen der ersten BS und der zweiten BS.

4. Verfahren nach Anspruch 2 oder 3, wobei die vorgegebene Anforderung darin besteht, dass der erste Luftschnittstellen-Versatz und der zweite Luftschnittstellen-Versatz einer Formel entsprechen:

der erste Luftschnittstellen-Versatz = (Gesamtanzahl von Rahmen in einem Superrahmen - der zweite Luftschnittstellen-Versatz) mod 2^20.

5. Verfahren nach einem der Ansprüche 1 bis 4, wobei das Verfahren außerdem umfasst:

Verwenden der ersten BS oder der zweiten BS als eine Referenz-BS zum Synchronisieren (308) von Luftschnittstellen von BS, die um die Referenz-BS herum angeordnet sind.

6. Basisstation-Controller, BSC, der umfasst:

eine Einheit (503) zum Erhalten eines Luftschnittstellen-Versatzes, die dafür konfiguriert ist, einen Luftschnittstellen-Versatz zwischen einer ersten BS und einer zweiten BS zu erhalten, und
eine Anweisungseinheit (505), die mit der Einheit (503) zum Erhalten eines Luftschnittstellen-Versatzes verbunden und dafür konfiguriert ist, die erste BS oder die zweite BS anzuweisen, Luftschnittstellen der ersten BS und der zweiten BS unter Verwendung des mithilfe der Einheit zum Erhalten des Luftschnittstellen-Versatzes erhaltenen Luftschnittstellen-Versatzes zwischen der ersten BS und der zweiten BS zu synchronisieren,
wobei der BSC **dadurch gekennzeichnet ist, dass** der mithilfe der Einheit zum Erhalten eines Luftschnittstellen-Versatzes erhaltene Luftschnittstellen-Versatz zwischen der ersten BS und der zweiten BS unter Verwendung eines Luftschnittstellen-Versatzes zwischen der ersten BS und der zweiten BS berechnet wird, der von einer Mobilstation, MS, gemeldet wird, sowie mithilfe von der Mobilstation gemeldeter Zeitfortschrittswerte, TA-Werte, wenn der von der MS gemeldete Luftschnittstellen-Versatz zwischen der ersten BS und der zweiten BS einer Protokollanforderung entspricht.

7. BSC nach Anspruch 6, wobei
die Einheit (503) zum Erhalten eines Luftschnittstellen-Versatzes außerdem eine zweite Versatz-Berechnungseinheit (607) und eine Beurteilungseinheit (609) umfasst,
wobei die Anweisungseinheit (505) außerdem konfiguriert ist zum:

Erteilen einer Anweisung für eine Übergabe einer MS von einer ersten Zelle der ersten BS an eine zweite Zelle der zweiten BS, wobei die MS einen ersten Luftschnittstellen-Versatz zwischen der ersten BS und der zweiten BS misst und meldet, sowie zum Erteilen einer Anweisung für eine Übergabe der MS von der zweiten Zelle an die erste Zelle, wobei die MS einen zweiten Luftschnittstellen-Versatz zwischen der ersten BS und der zweiten BS misst und meldet;

die Beurteilungseinheit (609) ist dafür konfiguriert, den von der MS gemessenen ersten Luftschnittstellen-Versatz zwischen der ersten BS und der zweiten BS zu erhalten und den von der MS gemessenen zweiten Luftschnittstellen-Versatz zwischen der ersten BS und der zweiten BS zu erhalten; die Beurteilungseinheit (609) ist außerdem dafür konfiguriert, den ersten Luftschnittstellen-Versatz und den zweiten Luftschnittstellen-Versatz zu beurteilen, und wenn der erste Luftschnittstellen-Versatz und der zweite Luftschnittstellen-Versatz eine vorgegebene Anforderung erfüllen, den ersten Luftschnittstellen-Versatz und den zweiten Luftschnittstellen-Versatz an die zweite Versatz-Berechnungseinheit auszugeben, und

die zweite Versatz-Berechnungseinheit (607) ist dafür konfiguriert, den Luftschnittstellen-Versatz zwischen der ersten BS und der zweiten BS unter Verwendung des ersten Luftschnittstellen-Versatzes oder des zweiten Luftschnittstellen-Versatzes sowie von der MS gemeldeter Zeitfortschrittswerte, TA-Werte, zu berechnen.

8. Funk-Datenübertragungssystem, das umfasst:

einen Basisstations-Controller, BSC, nach einem der Ansprüche 6 bis 7 und eine Basisstation (BS), wobei die BS umfasst:

eine Signalisierungs-Empfangseinheit (803), die dafür konfiguriert ist, von dem BSC einen Luftschnittstellen-Versatz zwischen der BS und einer zweiten BS zu empfangen, und
eine Steuereinheit (805), die mit der Signalisierungs-Empfangseinheit verbunden und dafür konfiguriert ist, die Luftschnittstelle der BS unter Verwendung des von der Signalisierungs-Empfangseinheit (803) empfangenen Luftschnittstellen-Versatzes zwischen der BS und der zweiten BS zu synchronisieren.

9. Funk-Datenübertragungssystem nach Anspruch 8, wobei die BS außerdem eine Signalisierungs-Sendeeinheit (807) umfasst;
die Signalisierungs-Empfangseinheit (803) ist außerdem dafür konfiguriert, einen Befehl zu empfangen, der dazu dient, die BS anzuweisen, eine absolute Zeit der Luftschnittstelle der BS an einen BSC zu melden, und
die Signalisierungs-Sendeeinheit (807) ist dafür konfiguriert, als Reaktion auf den Befehl von dem BSC die absolute Zeit der Luftschnittstelle der BS zu melden.

10. Funk-Datenübertragungssystem nach Anspruch 8, wobei die BS außerdem umfasst:

die Signalisierungs-Empfangseinheit (803), die außerdem dafür konfiguriert ist, von dem BSC einen Befehl zu empfangen,
wobei die Steuereinheit (805) außerdem dafür konfiguriert ist, als Reaktion auf die Anweisung von dem BSC eine Luftschnittstellen-Rahmenunterbrechungszeit bzw. -Rahmenanzahl unter Verwendung des Luftschnittstellen-Versatzes zwischen der BS und der zweiten BS anzupassen oder als Reaktion auf die Anweisung von dem BSC die Luftschnittstelle der BS unter Verwendung des Luftschnittstellen-Versatzes zwischen der BS und der zweiten BS anzupassen, sodass ein Versatz zwischen der absoluten Zeit der Luftschnittstelle der BS und der absoluten Zeit der Luftschnittstelle der zweiten BS unterhalb eines vorgegebenen Anpassungs-Schwellenwerts liegt.

## Revendications

1. Procédé de synchronisation d'interfaces radio comprenant les étapes suivantes :

obtenir (201, 202) un décalage d'interfaces radio entre une première station de base, BS, et une seconde BS et synchroniser (203) des interfaces radio de la première BS et de la seconde BS conformément au décalage d'interfaces radio entre la première BS et la seconde BS ;
où le procédé de synchronisation d'interfaces radio est **caractérisé en ce que** le processus d'obtention (201, 202) du décalage d'interfaces radio entre les première et seconde BS comprend en outre les étapes suivantes :

calculer (306) le décalage d'interfaces radio entre la première BS et la seconde BS en utilisant un décalage d'interfaces radio entre la première BS et la seconde BS, qui est rapporté par une station mobile, MS, et des valeurs d'avance temporelle, TA, rapportées par la MS, si le décalage d'interfaces radio entre la première BS et la seconde BS qui est rapporté par la MS satisfait aux exigences du protocole.

2. Procédé selon la revendication 1, dans lequel le processus de calcul (306) du décalage d'interfaces radio entre la première BS et la seconde BS au moyen d'un décalage d'interfaces radio entre la première BS et la seconde BS, qui est rapporté par une station mobile, MS, et des valeurs d'avance temporelle, TA, rapportées par la MS, où le décalage d'interfaces radio entre la première BS et la seconde BS qui est rapporté par la MS satisfait aux exigences du protocole, comprend en outre les étapes suivantes :

déclencher (301) un transfert de la MS à partir d'une première cellule de la première BS vers une seconde cellule de la seconde BS ;
obtenir (302) un premier décalage d'interfaces radio entre la première BS et la seconde BS mesuré par la MS ;
déclencher (303) un transfert de la MS depuis la seconde cellule vers la première cellule ;
obtenir (304) un second décalage d'interfaces radio entre la première BS et la seconde BS mesuré par la MS ; et
calculer (306) le décalage d'interfaces radio entre la première BS et la seconde BS en utilisant le premier décalage d'interfaces radio ou le second décalage d'interfaces radio rapporté par la MS et les valeurs de TA rapportées par la MS lorsque le premier décalage d'interfaces radio et le second décalage d'interfaces radio satisfont une exigence prédéterminée.

3. Procédé selon la revendication 1, dans lequel le processus de calcul (306) du décalage d'interfaces radio entre la première BS et la seconde BS au moyen d'un décalage d'interfaces radio entre la première BS et la seconde BS, qui est rapporté par une station mobile, MS, et des valeurs d'avance temporelle, TA, rapportées par la MS, où le décalage d'interfaces radio entre la première BS et la seconde BS qui est rapporté par la MS satisfait aux exigences du protocole, comprend en outre les étapes suivantes :

déclencher (301) un transfert de la MS à partir d'une première cellule de la première BS vers une seconde cellule de la seconde BS ;
obtenir (302) un premier décalage d'interfaces radio entre la première BS et la seconde BS mesuré par la MS ;
déclencher (303) un transfert de la MS depuis la seconde cellule vers la première cellule ;
obtenir (304) un second décalage d'interfaces radio entre la première BS et la seconde BS mesuré par la MS ; et
si le premier décalage d'interfaces radio et le second décalage d'interfaces radio ne satisfont pas une exigence prédéterminée, sélectionner une autre MS et obtenir le décalage d'interfaces radio entre la première BS et la seconde BS.

4. Procédé selon la revendication 2 ou la revendication 3, dans lequel l'exigence prédéterminée consiste en ce que le premier décalage d'interfaces radio et le second décalage d'interfaces radio satisfont la formule suivante :

premier décalage d'interfaces radio = (nombre total de trames dans une super trame - second décalage d'interfaces radio) mod 2^20.

5. Procédé selon l'une quelconque des revendications 1 à 4, dans lequel le procédé comprend en outre l'étape suivante :

prendre la première BS ou la seconde BS comme BS de référence pour synchroniser des interfaces radio de BS qui entourent la BS de référence (308).

6. Contrôleur de station de base, BSC, comprenant :

une unité d'obtention de décalage d'interfaces radio (503) configurée pour obtenir un décalage d'interfaces radio entre une première BS et une seconde BS ; et
une unité d'instruction (505), couplée à l'unité d'obtention de décalage d'interfaces radio (503), et configurée pour donner comme instruction à la première BS ou à la seconde BS de synchroniser les interfaces radio de la première BS et de la seconde BS en utilisant le décalage d'interfaces radio entre la première BS et la seconde BS obtenu par l'unité d'obtention de décalage d'interfaces radio ;
où le BSC est **caractérisé en ce que** le décalage d'interfaces radio entre la première BS et la seconde BS obtenu par l'unité d'obtention de décalage d'interfaces radio est calculé en utilisant un décalage d'interfaces radio entre la première BS et la seconde BS qui est rapporté par une station mobile, MS, et des valeurs d'avance temporelle, TA, rapportées par la MS, si le décalage d'interfaces radio entre la première BS et la seconde BS

qui est rapporté par la MS satisfait aux exigences du protocole.

7. BSC selon la revendication 6, dans lequel :

l'unité d'obtention de décalage d'interfaces radio (503) comprend en outre une seconde unité de calcul de décalage (607) et une unité de jugement (609) ;
l'unité d'instruction (505) est en outre configurée pour :

donner comme instruction de procéder à un transfert d'une MS d'une première cellule de la première BS à une seconde cellule de la seconde BS, où la MS mesure et rapporte un premier décalage d'interfaces radio entre la première BS et la seconde BS, et donner comme instruction de procéder à un transfert de la MS de la seconde cellule vers la première cellule, où la MS mesure et rapporte un second décalage d'interfaces radio entre la première BS et la seconde BS ;
l'unité de jugement (609) est configurée pour obtenir le premier décalage d'interfaces radio entre la première BS et la seconde BS mesuré par la MS et obtenir le second décalage d'interfaces radio entre la première BS et la seconde BS mesuré par la MS ;
l'unité de jugement (609) est en outre configurée pour effectuer un jugement sur le premier décalage d'interfaces radio et le second décalage d'interfaces radio et, si le premier décalage d'interfaces radio et le second décalage d'interfaces radio satisfont une exigence prédéterminée, délivrer en sortie le premier décalage d'interfaces radio et le second décalage d'interfaces radio à la seconde unité de calcul de décalage ; et
la seconde unité de calcul de décalage (607) est configurée pour calculer le décalage d'interfaces radio entre la première BS et la seconde BS en utilisant le premier décalage d'interfaces radio ou le second décalage d'interfaces radio et des valeurs d'avance temporelle, TA, rapportées par la MS.

8. Système de communication radio comprenant :

un contrôleur de station de base, BSC, selon l'une des revendications 6 et 7 et une station de base, BS, où la BS comprend :

une unité de réception de signalisation (803) configurée pour recevoir un décalage d'interfaces radio entre la BS et une seconde BS du BSC ; et
une unité de contrôle (805) couplée à l'unité de réception de signalisation, configurée pour synchroniser l'interface radio de la BS au moyen du décalage d'interfaces radio entre la BS et la seconde BS, qui est reçu par l'unité de réception de signalisation (803).

9. Système de communication radio selon la revendication 8, dans lequel la BS comprend en outre une unité d'envoi de signalisation (807) ;
l'unité de réception de signalisation (803) est en outre configurée pour recevoir une commande pour donner comme instruction à la BS de rapporter un temps absolu d'interface radio de la BS à un BSC ; et
l'unité d'envoi de signalisation (807) est configurée pour rapporter le temps absolu d'interface radio de la BS en réponse à la commande provenant du BSC.

10. Système de communication radio selon la revendication 8, dans lequel la BS comprend en outre :

l'unité de réception de signalisation (803), configurée en outre pour recevoir une instruction provenant du BSC ; et
l'unité de contrôle (805), configurée en outre pour ajuster un temps d'interruption de trame d'interface radio ou un nombre de trames en réponse à l'instruction provenant du BSC en utilisant le décalage d'interfaces radio entre la BS et la seconde BS ou pour ajuster l'interface radio de la BS en réponse à l'instruction provenant du BSC en utilisant le décalage d'interfaces radio entre la BS et la seconde BS de manière à ce qu'un décalage entre le temps absolu de l'interface radio de la BS et le temps absolu de l'interface radio de la seconde BS soit inférieur à un seuil d'ajustement prédéterminé.

105

Satellite

100

101a 103a

GPS

BS

101b 103b

GPS

BS

101c 103c

GPS

BS

FIG. 1

| The BSC delivers a command to BS1 and BS2 to trigger BS1 and BS2 to report the absolute time of their air interfaces | 201 |
| --- | --- |
| The BSC calculates a time difference according to the air interface absolute time reported by the two BSs | 202 |
| The air interfaces of BS1 and BS2 are synchronized according to their air interface offset | 203 |

FIG. 2

The BSC delivers a command to trigger the handover of an MS from cell A of BS1 to cell B of BS2 — 301

The BSC receives a first air interface offset between BS1 and BS2 measured by the MS — 302

The BSC delivers a command to trigger the handover of the MS from cell B to cell A — 303

The BSC receives a second air interface offset between BS1 and BS2 measured by the MS — 304

The BSC determines whether the air interface offsets reported by the MS comply with the protocol requirement — 305 — No

Yes

The BSC calculates an air interface offset between BS1 and BS2 according to the air interface offsets reported by the MS and TAs reported by the MS — 306

The air interfaces of BS1 and BS2 are synchronized according to their air interface offset — 308

FIG. 3

FIG. 4

FIG. 5

BSC

Air interface offset obtaining unit ⌒ 603

Judging unit ⌒ 609

Second offset calculating unit ⌒ 607

Instructing unit ⌒ 605

FIG. 6

BSC

Air interface offset obtaining unit ⌒ 703

Judging unit ⌒ 709

Third offset calculating unit ⌒ 707

Instructing unit ⌒ 705

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101035327 A
- WO 0115345 A
- EP 1605610 A2
- WO 9965163 A1